# FASCICULE DE BREVET EUROPEEN

(11) **EP 0 859 222 B1**
(45) Date de publication et mention de la délivrance du brevet: **11.12.2002**
(21) Numéro de dépôt: 98400138.8
(22) Date de dépôt: 23.01.1998
(51) Int. Cl.: G01D 11/24, G01P 1/00, G01P 3/44

(54) **Dispositif pour mesurer la rotation d'un élément rotatif**
Einrichtung zur Messung der Drehung eines rotierenden Objektes
Device for measuring the rotation of a rotating object

(30) Priorité: 14.02.1997 FR 9701726
(43) Date de publication de la demande: 19.08.1998
(73) Titulaire: SNR ROULEMENTS, 74010 Annecy Cédex (FR)
(72) Inventeur: Peilloud, Fernand, 74540 Hery sur Alby (FR)
(74) Mandataire: Srour, Elie

(56) Documents cités:
- FR-A- 2 668 606
- US-A- 4 839 591
- US-A- 5 081 756
- PATENT ABSTRACTS OF JAPAN vol. 18, no. 247 (P-1735), 11 mai 1994 & JP 06 028601 A (SHARP CORP), 4 février 1994,

## Description

La présente invention se rapporte à un dispositif pour mesurer la rotation d'un élément rotatif et plus particulièrement à un dispositif comprenant un codeur magnétique devant être maintenu à proximité d'un capteur.

Classiquement, les dispositifs pour mesurer la position angulaire ou la vitesse d'un élément en rotation comprennent un capteur maintenu immobile par rapport au référentiel de mesure et un codeur magnétique entraîné en rotation par l'arbre, le capteur coopérant avec le codeur magnétique pour fournir un signal à une centrale électronique réalisant le traitement de l'information.

De tels dispositifs présentent l'inconvénient de nécessiter un entrefer constant entre le codeur magnétique et le capteur, une variation de ce dernier, par exemple lors d'importantes vibrations de l'élément en rotation, pouvant conduire à des informations incorrectes.

Il est connu pour remédier à cet inconvénient d'utiliser des moyens d'applications, tels qu'une rondelle élastique, pour maintenir le codeur magnétique à proximité étroite du capteur. Un exemple de ce type de dispositif est décrit et représenté dans le document FR-A-2 668 606 déposé par la demanderesse.

Toutefois, cette solution entraîne la réalisation d'un dispositif assez complexe, comportant de nombreuses pièces à assembler, engendrant ainsi un encombrement et un coût important du dispositif qui le rend peu adapté aux applications les plus simples.

Le but de la présente invention est donc de proposer un dispositif pour mesurer la rotation d'un élément rotatif qui soit peu encombrant et qui assure le bon positionnement et le maintien d'un entrefer constant entre le codeur magnétique et le capteur et qui soit simple et économique à réaliser.

L'invention a pour objet un dispositif pour mesurer la rotation d'un élément rotatif comprenant un codeur magnétique tournant avec l'élément rotatif et un capteur intégré à un support immobilisé en rotation, le codeur magnétique étant maintenu à proximité étroite du capteur par des moyens d'application magnétique.

Selon l'invention, le dispositif pour mesurer la rotation d'un élément rotatif est caractérisé en ce que les moyens d'application magnétique sont constitués d'une part par le codeur magnétique et d'autre part par le support réalisé au moins partiellement en matériau magnétique, la force d'attraction magnétique crée entre le codeur magnétique et le matériau magnétique du support maintenant en contact ces derniers.

Selon une autre caractéristique de l'invention, le support est réalisé en matériau ferromagnétique.

Selon une autre caractéristique de l'invention, le codeur magnétique est magnétisé à aimantation permanente multipolaire sur sa face en contact avec le support.

Selon une autre caractéristique de l'invention, un film autolubrifiant est interposé au niveau de la surface de contact entre le codeur magnétique et le support.

Selon une autre caractéristique du dispositif objet de l'invention, le film autolubrifiant est composé d'un film comportant une face adhésive collée sur le support, l'autre face du film au contact du codeur magnétique étant principalement constituée d'un matériau connu pour présenter un faible coefficient de frottement tel que du PTFE.

Selon une autre caractéristique du dispositif objet de l'invention, le codeur magnétique et le support sont de forme annulaire, le support comportant également une extension radiale permettant son immobilisation par rapport à un élément fixe.

Selon une autre caractéristique du dispositif objet de l'invention, le support comporte un épaulement cylindrique venant s'emboîter dans un embrèvement cylindrique ménagé dans le codeur magnétique afin de réaliser le guidage axial du codeur magnétique par rapport au support, le codeur magnétique annulaire étant entraîné en rotation par l'élément rotatif au moyen d'un assemblage prismatique.

Selon encore une autre caractéristique du dispositif objet de l'invention, le codeur magnétique est porté par un moyeu entraîné en rotation par l'élément rotatif au moyen d'un assemblage prismatique, le moyeu comportant une portée cylindrique s'insérant dans un alésage du support afin de réaliser le guidage axial de ces derniers.

Selon une autre caractéristique du dispositif objet de l'invention, le capteur est réalisé par une sonde de mesure de champ magnétique à effet hall ou à magnétoresistance, la sonde de mesure étant disposée sur le support, légèrement en retrait de la surface de contact entre le support et le codeur magnétique, et relié à un connecteur par un circuit électronique de liaison.

On comprendra mieux les buts, aspects et avantages de la présente invention, d'après la description donnée ci-après de différents modes de réalisation de l'invention, présenté à titre d'exemple non limitatif, en se référant aux dessins annexés, dans lesquels :
- la figure 1 est une vue en coupe axiale d'un dispositif pour mesurer la rotation d'un arbre selon un premier mode de réalisation de l'invention ;
- la figure 2 est une vue de coté du dispositif représenté à la figure 1;
- la figure 3 est une vue en perspective du dispositif des figures 1 et 2;
- la figure 4 est une vue en coupe axiale d'un dispositif pour mesurer la rotation d'un arbre selon un second mode de réalisation.

Pour faciliter la lecture des dessins, les mêmes pièces portent les mêmes références d'une figure à l'autre. Par ailleurs, seuls les éléments nécessaires à la compréhension de l'invention ont été figurés.

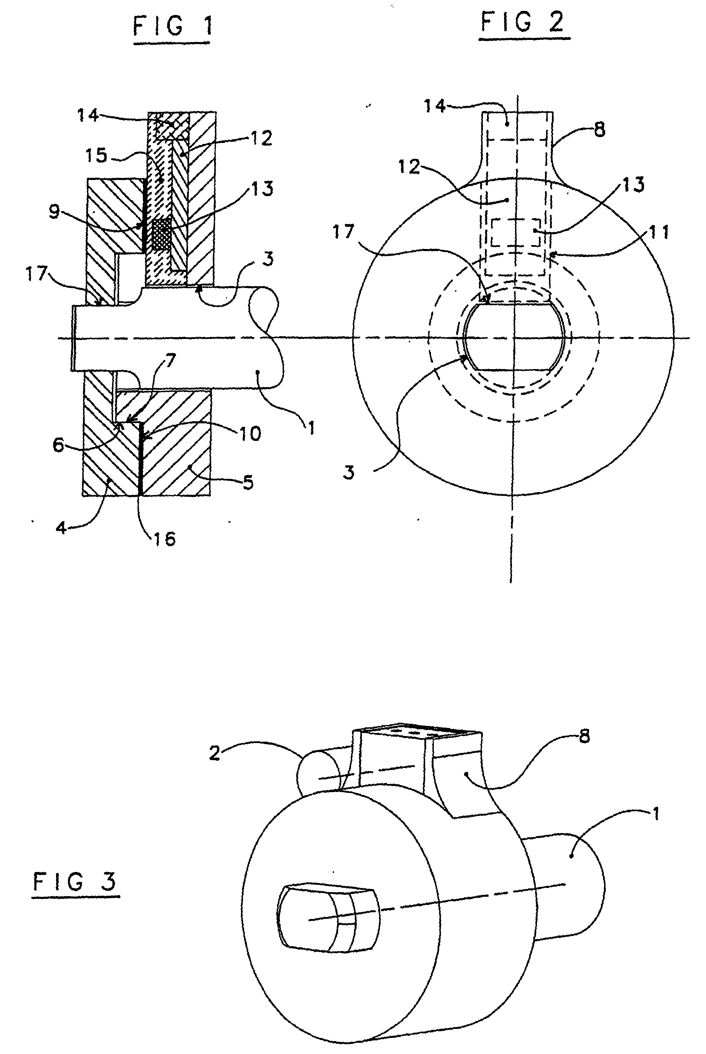

Les figures 1, 2 et 3 représentent un dispositif pour mesurer la rotation d'un arbre 1 comprenant un codeur magnétique 4 tournant avec l'arbre 1 et un capteur 13 porté par un support 5 immobile par rapport au référentiel de mesure, le capteur 13 coopérant avec le codeur magnétique 4 pour déterminer la vitesse ou la position angulaire de l'arbre 1.

Le codeur magnétique 4, de forme annulaire, est monté sur l'arbre 1 au moyen d'un alésage de forme prismatique 17 coopérant avec deux méplats parallèles disposés en bout de l'arbre 1, l'assemblage ainsi constitué permettant l'entraînement en rotation du codeur magnétique 4 par l'arbre 1 et l'immobilisation axiale du codeur magnétique 4 par un ajustement serré de l'alésage 17 sur l'arbre 1.

Le codeur magnétique 4, centré sur l'arbre 1, comporte une paroi d'appui 9 magnétisée à aimantation permanente multipolaire venant en regard d'une surface 10 correspondante du support 5.

Le support 5, réalisé en matériau ferromagnétique tel que du fer ou de l'acier doux, présente en son centre un alésage cylindrique 3 permettant le passage de l'arbre 1 et le déplacement axial du support 5 contre le codeur magnétique 4.

Le support 5 présente également, du coté de la surface 10, un épaulement 7 cylindrique s'insérant dans un embrèvement 6 cylindrique du codeur magnétique 4 réalisé du coté de la paroi d'appui 9. La dimension longitudinale de l'épaulement 7 est inférieure à la profondeur de l'embrèvement 6 de façon à permettre à la paroi d'appui 9 du codeur magnétique 4 de venir au contact de la surface 10 du support 5. Par ailleurs, les diamètres de l'embrèvement 6 et de l'épaulement 7 cylindriques sont ajustés pour permettre d'assurer simultanément la coaxialité et la libre rotation relative du codeur magnétique 4 par rapport au support 5.

Le support 5 possède une extension radiale 8 dans laquelle est ménagée une rainure 11 parallélépipèdique s'étendant radialement sur la surface 10, de l'alésage 3 à la face extérieure de l'extension radiale 8. Cette extension radiale 8 sert d'arrêt en rotation du support 5 contre une butée 2 solidaire du référentiel de mesure.

La rainure 11 porte un circuit électronique 12 comportant le capteur 13, réalisé par au moins une sonde à effet hall ou une magnétorésistance, des moyens de traitement du signal et des moyens de connexions d'entrée et de sortie à un connecteur 14. Le capteur 13 est disposé dans la rainure 11 à une distance radiale adaptée de manière à venir en face du codeur magnétique 4 lorsque ce dernier est disposé contre le support 5. L'ensemble électronique ainsi réalisé, électriquement isolé du support 5, est surmoulé d'un matériau protecteur isolant 15 jusqu'au niveau de la surface 10 du support 5.

Un film de matériau autolubrifiant 16, facilitant le glissement en rotation du codeur magnétique 4 sur le support 5, est interposé entre la paroi d'appui 9 et la surface 10. Le film est dans l'exemple de réalisation constitué d'un film fin comportant une face adhésive collée contre la surface 10 du support 5, l'autre face du film, en contact avec la paroi d'appui 9 du codeur magnétique 4 étant constituée par exemple d'un matériau de type PTFE connu pour son faible coefficient de frottement.

Dans le dispositif ainsi réalisé, le champ magnétique multipolaire délivré par la paroi d'appui 9 du codeur magnétique 4 est simultanément signal d'entrée du capteur 13 et élément de retenue du support 5 contre le codeur magnétique 4 par la force d'attraction qu'il génère, permettant par conséquent de maintenir un entrefer constant de lecture entre le capteur 13 et le codeur magnétique 4 lors de la rotation relative de ces derniers.

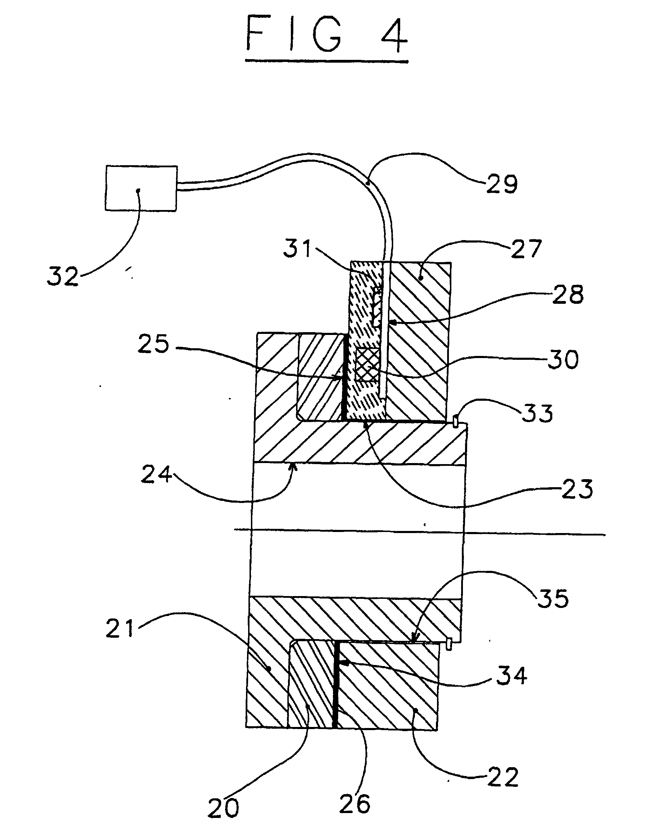

La figure 4 présente un second mode de réalisation du dispositif selon l'invention. Ce dispositif comprend, de manière similaire au dispositif précédemment décrit, un codeur magnétique 20 entraîné en rotation par l'arbre 1, non représenté sur cette figure, et un capteur 30 porté par un support 22 immobile par rapport au référentiel de mesure, le capteur 30 coopérant avec le codeur magnétique 20 pour déterminer la vitesse ou la position angulaire de l'arbre 1.

Le codeur magnétique 20, constitué d'un aimant multipolaire de forme annulaire, est fixé concentriquement par une de ses faces, par exemple par collage, contre l'épaulement d'un moyeu 21, l'autre face formant une paroi d'appui 25 destinée à venir en regard d'une surface 34 du support 22. Le moyeu 21 comporte un alésage de forme prismatique 24 coopérant, par un ajustement serré, avec deux méplats de l'arbre 1 de manière à réaliser l'immobilisation relative de ces derniers.

Le moyeu 21 se prolonge au travers de l'aimant multipolaire 20 par une portion cylindrique 23 venant s'insérer dans un alésage 35 du support 22, le diamètre de l'alésage 35 étant ajusté au diamètre de la portion cylindrique 23 pour assurer simultanément la coaxialité et la libre rotation du moyeu 21 par rapport au support 22.

De manière analogue au support 5 de la figure 2, le support 22, de forme sensiblement annulaire, présente une extension radiale 27 servant de butée d'arrêt en rotation du support 22 contre une pièce, non représentée sur la figure, solidaire du référentiel de mesure.

L'extension radiale 27 comporte une rainure 28 parallélépipèdique s'étendant radialement sur la surface 34 depuis l'alésage 35 jusqu'à la surface extérieure de l'extension radiale 27. Cette rainure 28 porte un circuit électronique 29 constitué d'un film souple portant des pistes conductrices reliant le capteur 30, réalisé par au moins une sonde à effet Hall ou une magnétorésistance, un module 31 de traitement du signal et un connecteur 32 permettant l'alimentation électrique et la sortie du signal délivré par le capteur 30.

Un film de matériau autolubrifiant 26 facilitant le glissement en rotation de l'aimant multipolaire 20 contre le support 22 est interposé entre la paroi d'appui 25 de l'aimant multipolaire 20 et la surface 34 du support 22.

Ce mode de réalisation de l'invention permet de maintenir de manière simple et efficace un entrefer constant entre le capteur 30 et l'aimant multipolaire 20 tout en permettant un montage rapide sur l'arbre 1. En effet, le champ magnétique multipolaire délivré par la paroi d'appui 25 de l'aimant magnétique 20 est simultanément signal d'entrée du capteur 30 et élément de retenue du support 22 contre l'aimant magnétique 20 par la force d'attraction qu'il génère.

Un tel dispositif présente par ailleurs l'avantage de pouvoir être préassemblé avant d'être monté sur l'arbre 1, un arrêt 33 pouvant être monté en bout de la portion cylindrique 23 du moyeu 21 pour éviter tout risque de désassemblage du dispositif lors des manipulations nécessaires au montage.

Les deux modes de réalisation du dispositif selon l'invention précédemment décrits permettent donc, d'une manière simple et rapide, de maintenir un codeur magnétique à entrefer constant d'un capteur.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons, tels qu'ils sont définis dans les revendications jointes.

Ainsi, la liaison de type prismatique entre l'arbre en rotation et le codeur magnétique peut être remplacée par tout type de liaison rendant le codeur magnétique solidaire de l'arbre.

Ainsi, à l'inverse des exemples décrits précédemment, il est possible de monter le codeur magnétique mobile axialement par rapport à l'arbre et de monter le support de capteur fixe axialement par rapport à l'arbre, le champ magnétique réalisant alors la retenu axiale du codeur magnétique contre le support.

## Revendications

1. Dispositif pour mesurer la rotation d'un élément rotatif (1) comprenant un codeur magnétique (4;20) tournant avec l'élément rotatif (1) et un capteur (13;30) intégré à un support (5;22) immobilisé en rotation, ledit codeur magnétique (4,20) étant maintenu à proximité étroite du capteur (13;30) par l'attraction magnétique générée entre d'une part le codeur magnétique (4;20) et d'autre part le support (5;22) réalisé, au moins partiellement, en matériau magnétique, **caractérisé en ce qu'**un film autolubrifiant (16;26) est interposé au niveau de la surface de contact entre le codeur magnétique (4;20) et le support (5;22)

2. Dispositif pour mesurer la rotation d'un élément rotatif (1) selon la revendication 1, **caractérisé en ce que** ledit support (5;22) est réalisé en matériau ferromagnétique.

3. Dispositifpour mesurer la rotation d'un élément rotatif (1) selon l'une quelconque des revendications 1 à 2, **caractérisé en ce que** ledit codeur magnétique (4;20) est magnétisé à aimantation permanente multipolaire sur sa face en contact avec le support (5;22).

4. Dispositif pour mesurer la rotation d'un élément rotatif (1) selon l'une quelconque des revendications 1 à 3, **caractérisé en ce que** le film autolubrifiant (16;26) est composé d'un film comportant une face adhésive collée sur le support (5;22), l'autre face du film au contact du codeur magnétique (4;20) étant principalement constituée d'un matériau connu pour présenter un faible coefficient de frottement tel que du PTFE.

5. Dispositif pour mesurer la rotation d'un élément rotatif (1) selon l'une quelconque des revendications 1 à 4, **caractérisé en ce que** le codeur magnétique (4;20) et le support (5;22) sont de forme annulaire, ledit support (5;22) comportant une extension radiale (8;27) permettant son immobilisation par rapport à un élément fixe.

6. Dispositif pour mesurer la rotation d'un élément rotatif (1) selon la revendication 5, **caractérisé en ce que** ledit support (5) comporte un épaulement cylindrique (7) venant s'emboîter dans un embrèvement cylindrique (6) ménagé dans le codeur magnétique(4) afin de réaliser le guidage axial dudit codeur magnétique (4) par rapport audit support (5), ledit codeur magnétique (4) étant entraîné en rotation par l'élément rotatif (1).

7. Dispositif pour mesurer la rotation d'un élément rotatif (1) selon la revendication 5, **caractérisé en ce que** ledit codeur magnétique (20) annulaire est porté par un moyeu (21) entraîné en rotation par l'élément rotatif (1), ledit moyeu (21) comportant une portée cylindrique (23) s'insérant dans un alésage (24) dudit support (22) afin de réaliser le guidage axial du support (22) par rapport au codeur magnétique (20).

8. Dispositif pour mesurer la rotation d'un élément rotatif (1) selon l'une quelconque des revendications 1 à 7, **caractérisé en ce que** ledit capteur (13;30) est réalisé par une sonde de mesure de champ magnétique à effet hall ou à magnétoresistance, ladite sonde de mesure (13;30) étant disposée sur le support (5;22), légèrement en retrait de la surface de contact entre ce dernier et le codeur magnétique (4;20), et relié à un connecteur (14;32) par un circuit électronique (12;29) de liaison.

## Patentansprüche

1. Vorrichtung zur Messung der Rotation eines Rotationselements (1), umfassend einen magnetischen Codierer (4; 20), der sich mit dem Rotationselement (1) dreht, und einen Sensor (13; 30), der in einen Träger (5; 22) integriert ist, dessen Rotation blockiert ist, wobei der magnetische Codierer (4; 20) durch die magnetische Anziehungskraft, die zwischen dem magnetischen Codierer (4; 20) einerseits und dem mindestens teilweise aus magnetischem Material gebildeten Träger (5; 22) andererseits erzeugt wird, in enger Nähe zum Sensor (13; 30) gehalten wird, **dadurch gekennzeichnet, dass** ein selbstschmierender Film (16; 26) im Bereich der Kontaktfläche zwischen dem magnetischen Codierer (4; 20) und dem Träger (5; 22) angeordnet ist.

2. Vorrichtung zur Messung der Rotation eines Rotationselements (1) nach Anspruch 1, **dadurch gekennzeichnet, dass** der Träger (5; 22) aus ferromagnetischem Material gebildet ist.

3. Vorrichtung zur Messung der Rotation eines Rotationselements (1) nach einem der Ansprüche 1 bis 2, **dadurch gekennzeichnet, dass** der magnetische Codierer (4; 20) an seiner Fläche, die sich mit dem Träger (5; 22) in Kontakt befindet, eine vielpolige permanente Magnetisierung aufweist.

4. Vorrichtung zur Messung der Rotation eines Rotationselements (1) nach einem der Ansprüche 1 bis 3, **dadurch gekennzeichnet, dass** der selbstschmierende Film (16; 26) aus einem Film gebildet ist, der eine Klebefläche umfasst, die auf den Träger (5; 22) geklebt ist, wobei die andere Fläche des Films, die sich mit dem magnetischen Codierer (4; 20) in Kontakt befindet, hauptsächlich aus einem Material gebildet ist, das dafür bekannt ist, einen geringen Reibungskoeffizienten aufzuweisen, wie z.B. PTFE.

5. Vorrichtung zur Messung der Rotation eines Rotationselements (1) nach einem der Ansprüche 1 bis 4, **dadurch gekennzeichnet, dass** der magnetische Codierer (4; 20) und der Träger (5; 22) ringförmig sind, wobei der Träger (5; 22) eine radiale Erweiterung (8; 27) aufweist, die seine Immobilisierung in Bezug auf ein fixes Element ermöglicht.

6. Vorrichtung zur Messung der Rotation eines Rotationselements (1) nach Anspruch 5, **dadurch gekennzeichnet, dass** der Träger (5) eine zylindrische Schulter (7) aufweist, die in eine zylindrische Senkung (6) eingefügt ist, die in dem magnetischen Codierer (4) gebildet ist, um die axiale Führung des magnetischen Codierers (4) in Bezug auf den Träger (5) zu bilden, wobei der magnetische Codierer (4) durch das Rotationselement (1) in Rotation versetzt wird.

7. Vorrichtung zur Messung der Rotation eines Rotationselements (1) nach Anspruch 5, **dadurch gekennzeichnet, dass** der ringförmige magnetische Codierer (20) durch eine Nabe (21) getragen wird, die durch das Rotationselement (1) in Rotation versetzt wird, wobei die Nabe (21) eine zylindrische Auflagefläche (23) umfasst, die in eine Bohrung (24) des Trägers (22) eingefügt ist, um die axiale Führung des Trägers (22) in Bezug auf den magnetischen Codierer (22) zu bilden.

8. Vorrichtung zur Messung der Rotation eines Rotationselements (1) nach einem der Ansprüche 1 bis 7, **dadurch gekennzeichnet, dass** der Sensor (13; 30) durch eine Halleffekt- oder magnetoresistive Sonde zur Messung des Magnetfelds gebildet wird, wobei die Messsonde (13; 30) auf dem Träger (5; 22), leicht von der Kontaktfläche zwischen dem letztgenannten und dem magnetischen Codierer (4; 20) zurückgesetzt, angeordnet ist und über eine elektronische Verbindungsschaltung (12; 29) mit einem Verbindungsteil (14; 32) verbunden ist.

## Claims

1. A device for measuring the rotation of a rotary member (1) comprising a magnetic encoder (4, 20) rotating with the rotary member (1) and a sensor (13, 30) integrated with a rotationally locked support (5, 22), the magnetic encoder (4, 20) being held in close proximity to the sensor (13, 30) by the magnetic attraction exerted between, on the one hand, the magnetic encoder (4, 20) and, on the other hand, the support (5, 22) formed, at least partially, from magnetic material, **characterised in that** a self-lubricating film (16, 26) is interposed at the contact surface between the magnetic encoder (4, 20) and the support (5, 22).

2. A device for measuring the rotation of a rotary member (1) as claimed in claim 1, **characterised in that** the support (5, 22) is made from ferromagnetic material.

3. A device for measuring the rotation of a rotary member (1) as claimed in any one of claims 1 to 2, **characterised in that** the magnetic encoder (4, 20) is magnetised with permanent multipolar magnetisation on its surface in contact with the support (5, 22).

4. A device for measuring the rotation of a rotary member (1) as claimed in any one of claims 1 to 3, **characterised in that** the self-lubricating film (16, 26) is composed of a film comprising an adhesive surface attached to the support (5, 22), the other surface of the film in contact with the magnetic encoder (4, 20) being formed chiefly from a material known to have a low coefficient of friction such as PTFE.

5. A device for measuring the rotation of a rotary member (1) as claimed in one of claims 1 to 4, **characterised in that** the magnetic encoder (4, 20) and the support (5, 22) are of annular shape, the support (5, 22) comprising a radial extension (8, 27) enabling its immobilisation with respect to a fixed member.

6. A device for measuring the rotation of a rotary member (1) as claimed in claim 5, **characterised in that** the support (5) comprises a cylindrical shoulder (7) which fits into a cylindrical bevel (6) provided in the magnetic encoder (4) in order axially to guide the magnetic encoder (4) with respect to the support (5), the magnetic encoder (4) being driven in rotation by the rotary member (1).

7. A device for measuring the rotation of a rotary member (1) as claimed in claim 5, **characterised in that** the annular magnetic encoder (20) is borne by a hub (21) driven in rotation by the rotary member (1), the hub (21) comprising a cylindrical bearing (23) inserted in a bore (24) of the support (22) in order axially to guide the support (22) with respect to the magnetic encoder (20).

8. A device for measuring the rotation of a rotary member (1) as claimed in any one of claims 1 to 7, **characterised in that** the sensor (13, 30) is formed by a Hall effect or magnetoresistance magnetic field measurement probe, the measurement probe (13, 30) being disposed on the support (5, 22) slightly retracted from the contact surface between the latter and the magnetic encoder (4, 20) and connected to a connector (14, 32) by an electronic connection circuit (12, 29).
